# EUROPEAN PATENT APPLICATION

(11) **EP 0 685 525 A1**
(43) Date of publication of application: **06.12.1995**
(21) Application number: 94201297.2
(22) Date of filing: 09.05.1994
(51) Int. Cl.: C08L 67/02, C08K 5/521

(54) **Polymer mixture comprising a polyalkylene phthalate, a vinylaromatic (meth)acrylonitrile-rubber based graft copolymer and a linear aliphatic polyester or an organic phosphate**

(71) Applicant: GENERAL ELECTRIC COMPANY, Schenectady, NY 12345 (US)
(72) Inventor: Tabankia, Farshid, NL-4600 AC Bergen op Zoom (NL); Mooijman, Frank Robert, NL-4600 AC Bergen op Zoom (NL); Van Den Helder, Lambertus Johannes, NL-4600 AC Bergen op Zoom (NL)
(74) Representative: Grever, Frederik

(57) **Abstract**

The known polymer mixtures comprising a polyalkylene phthalate and a vinylaromatic -(meth)acrylonitrile- rubber based graft copolymer do not fulfill all requirements for all needs. By incorporation of a linear aliphatic polyester or an organic phosphate it was possible to obtain polymer mixtures with an interesting combination of properties: a low heat sag, a low flexure modulus, a good Izod impact strength at low temperature, a good melt viscosity.

This combination could not be obtained with other plasticizers.

## Description

The invention relates to a polymer mixture comprising a polyalkylene phthalate, a vinylaromatic -(meth)acrylonitrile- rubber based graft copolymer and a linear aliphatic polyester or an organic phosphate or a mixture of the polyester and the phosphate.

Polymer mixtures comprising a polyalkylene phthalate and a vinylaromatic - (meth)acrylonitrile- rubber based graft copolymer are generally known. EP-A-0 022 216 describes high impact polymer mixtures comprising a polyalkylene phthalate i.e. polybutylene terephthalate and a vinylaromatic -(meth)acrylonitrile- rubber based graft copolymer i.e. a special type of ABS.

The invention deals with polymer mixtures comprising a polyalkylene phthalate and a vinylaromatic -(meth)acrylonitrile- rubber based graft copolymer with improved properties as compared to the generally known blends of a polyalkylene phthalate and a vinylaromatic -(meth)acrylonitrile- rubber based graft copolymer.

The invention deals with polymer mixture with a lower flexure modulus, a good low temperature impact strength and a good thermal resistance.

The polymer mixtures according to the invention comprise besides the above mentioned polyalkylene phthalate and vinylaromatic -(meth)acrylonitrile- rubber based graft copolymer a specifically chosen third component i.e. a linear aliphatic polyester or an organic phosphate.

GB-A-2 146 648 describes the use of a combination of expoxidised unsaturated triglyceride plasticizer and a polycaprolactone in polyethylene terephthalate based compositions. It is said that this combination, contrary to the plasticizer alone, improves the impact strength. This has been demonstrated in GB-A-2 146 648 by impact strength measurements at room temperature.

It has now been found that the incorporation of a linear aliphatic polyester, such as for example a polycaprolactone, or an organic phosphate in compositions comprising a polyalkylene phthalate and a vinylaromatic -(meth)acrylonitrile- rubber based graft copolymer results in a lowering of the flexure modulus, without negatively effecting the impact strength over a wide temperature range. This effect is achieved in the polymer mixtures of the invention in the absence of an epoxidized unsaturated triglyceride plasticizer as described in GB-A-2 146 648.

### Detailed description of the invention.

The polymer mixture of the invention comprises at least the following components:
A) a polyalkylene phthalate
B) a vinylaromatic -(meth)acrylonitrile- rubber based graft copolymer; and
C) a linear aliphatic polyester or an organic phosphate
The polymer mixture of the invention may further comprise usual additives.

### A. The polyalkylene phthalate.

The invention relates to polymer mixtures which comprise a polyalkylene phthalate with units derived from an alkanediol and an aromatic dicarboxylic acid. The polyalkylene phthalate may comprise units derived from one or more alkanediol compounds. The polyalkylene phthalate also comprises units derived from one or more aromatic dicarboxylic acids. In addition to the alkanediol, the poly-alkylene phthalate may comprise units derived from one or more other diol compounds or polyol compounds.

Polyalkylene phthalates generally comprise an excess of units derived from an alkanediol with respect to the optionally present units derived from other diol compounds or polyol compounds.Suitable alkanediol compounds are, for example, ethanediol or butane- 1,4-diol. In addition to units derived from aromatic dicarboxylic acids the polyalkylene phthalate may also comprise units derived from other dicarboxylic acids or polycarboxylic acids. However, the greater part of the units derived from acids is preferably derived from an aromatic dicarboxylic acid. Suitable aromatic dicarboxylic acids are terephthalic acid and isophthalic acid, preferably therephthalic acid.

As a polyalkylene phthalate is preferably used a polyalkylene phthalate having more than 70 mol % of units derived from terephthalic acid and butane-1,4-diol. It is also possible to use a mixture of two or more different polyalkylene phthalates.

### B. The vinylaromatic -(meth)acrylonitrile- rubber based graft copolymer

The polymer mixture of the invention comprises a vinylaromatic - (meth)acrylonitrile- rubber based graft copolymer. The vinylaromatic - (meth)acrylonitrile- rubber based graft copolymer preferably is the product obtained by grafting a mixture of (1) styrene and/or alphamethyl styrene and/or a styrene substituted with one or more halogen atoms or with organic groups in the aromatic nucleus and (2) a methylacrylonitrile and/or acrylonitrile and/or maleic anhydride and/or a derivative of maleic anhydride and/or acrylic on a rubber (3). The rubber is preferably a butadiene rubber.

The polymer mixture according to the invention may further comprise a copolymer built up from (1) styrene, and/or alpha-methyl styrene and/or a styrene substituted with one or more halogen atoms or with organic groups in the aromatic nucleus and (2) a methacrylonitrile and/or acrylonitrile and/or maleic anhydride and/or derivative of maleic anhydride and/or acrylic monomer.

The polymer mixture according to the invention may comprise a mixture of a styrene copolymer and a styrene graft polymer as described hereinabove.

### C. The linear aliphatic polyester or the organic phosphate.

Suitable linear aliphatic polyesters are for example polycaprolactone compounds as described in GB-A-2 146 648. Such compounds may have molecular weights (number average) of 10,000 to 300,000.
Particularly suitable organic phosphates are compounds with the following formula: 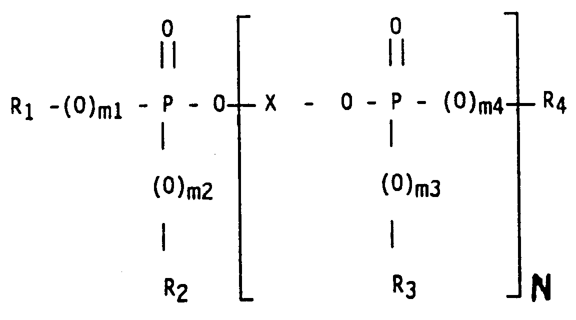
wherein R₁, R₂, R₃ and R₄ each represent an arylgroup which may be substituted with halogen atoms or alkylgroups chosen independently of each other and wherein X is an arylene group, M₁, M₂, M₃ and M₄ each independently of each other are zero or one and wherein N has a value of 0, 1, 2, 3 or 4. Preferably N=1.

The relative amounts of the components A, B and C in the polymer mixture of the invention can vary within wide limits. The polymer mixtures of the invention preferably comprise 50-90% by weight, more preferably 60-80, of the polyalkylene phthalate, 10-40% by weight, more preferably 20-30% of the vinylaromatic - (meth)acrylonitrile- rubber based graft copolymer and 1-10% by weight, more preferably 2-8% by weight of the finer aliphatic polyester. Said quantities are expressed with respect to the total quantity by weight of A, B and C together in the polymer mixture.

The polymer mixture according to the invention can be prepared in conventional ways for the preparation of polymer mixtures e.g. by melt blending, compounding in an extruder etc.

The polymer mixture according to the invention may comprise usual additives like anti-oxidants, fillers, reinforcing fillers, stabilizers, dyes and pigments, plasticizers, mold release agents, lubricants, antistatic agents, flame retardants and the like.

All patent (applications) mentioned herein are herewith incorporated by reference.

### Examples.

In the examples the following constituents have been used:
- PAP :: a polybutylene terephthalate with 100 mol % of units derived from butane-diol and terephthalate acid or its dimethyl ester, having an intrinsic viscosity of 1,18 ml/g measured in a phenol -(1,1,2,2-tetrachloroethane) mixture (60:40) at 25 degrees C.
- VMGR:: a ABS graft copolymer built up substantially from a butadiene rubber on which styrene and acrylonitrile have been grafted with a rubber content of approximately 65 %
- LAP:: a polycaprolactone with a molecular weight (number average) of about 50.000
- DP:: a mixture of phosphates with the formula of claim 5 wherein R₁, R₂, R₃ and R₄ represent a phenyl-group, M₁, M₂, M₃ and M₄ are all 1, X is a phenylene group and N has an average value of about 1.
- STAB:: conventional stabilizer package.

The above mentioned components were compounded together in a twin screw extruder with an average temperature setting of 240 degrees C. The extrudate was pelletized.

The melt viscosity at 260°C at a shear of 1500 per sec. was measured according to DIN 54811

Test plates and rods were injection molded out of the obtained pellets for the measurement of the Flexure Modulus (in accordance with ISO 178) and of the Izod Notched Impact strength at minus 20 degrees C (in accordance with ISO 180).

The heat sag was determined in accordance with the general principles as outlined in J.T. Kempthorn. The Use of Oven Heat Sag to Determine Heat Resistance in Polypropylenes in Polymer Engineering and Science, February 1993, Vol. 33 No. 4, p.248-252. Test bars measuring were injection molded according ISO/Dis 3167 type. The bars were clamped at the gated side such that 140 mm free overhang was obtained. The bars and the clamps were kept in hot air circulation oven at 120 degrees C for one hour. After cooling for 15 minutes the deplacement at the tip of the bar was measured in millimeters. This test is run twice for each sample. The average value is reported as the "heat sag".

The tested compositions and the obtained results are recorded in the following table A.

**TABLE A**

| Experiment no. | 1 | 2 | 3 |
|---|---|---|---|
| Composition (parts by weight) | | | |
| - PAP | 74 | 69 | 69 |
| - VMGR | 25 | 25 | 25 |
| - LAP | - | 5 | - |
| - DP | - | - | 5 |
| - STAB | 1 | 1 | 1 |

| Properties | | | |
|---|---|---|---|
| - Heat sag (mm) | 7.4 | 8.3 | 7.5 |
| - Flexure modulus (MPa) | 1630 | 1260 | 1300 |
| - Izod notched impact (kJ/m²) | 62 | 64 | 55 |
| - Melt viscosity (Pa.s) | 306 | 257 | 259 |

The polymer mixtures of experiments no. 1 and 2 were also suitable for the manufacture of articles which should be painted either with solvent based paints or with water born paint systems (even without primer). Both types of paints showed a good adhesion on such articles. The composition of experiment no. 3 was less suitable.

A number of other well known commercially available plasticizers were tested in polymer mixtures comprising the above mentioned polyalkylene phthalate and vinylaromatic -(meth)acrylonitrile- rubber based graft copolymer but not comprising a linear aliphatic polyester.

Tested were the following: a poly alpha olefine, penta erythritol tetra benzoate, a polar modified low molecular weight polypropylene. The use of a composition with a poly alpha olefine resulted in a undesirable high heat sag of about 10 mm; compositions with the penta erythritol tetra benzoate posses a heat sag of about 10 mm and a high flexure modulus of 1620. The composition with the polypropylene possessed a flexure modulus of 1522 (which is too high).

None of those tested plasticizers resulted in the same good combination of properties as obtained while using a linear aliphatic polyester or an organic phosphate.

By using a linear aliphatic polyester one can obtain polymer mixtures as shown in the composition of experiment 2 hereabove with a low heat sag, a low flexure modulus, a good Izod impact strength at low temperature a good melt viscosity and good paintability.

By using an organic phosphate one obtains a polymer mixture with a low heat sag, a low flexure modulus and a good low temperature impact strength.

## Claims

1. Polymer mixture comprising:
A) a polyalkylene phthalate;
B) a vinylaromatic -(meth)acrylonitrile- rubber based graft copolymers; and
C) a linear aliphatic polyester or an organic phosphate or a mixture thereof.

2. Polymer mixture of claim 1 wherein the polyalkylene phthalate consists of more than 70 mol % of units derived from terephthalic acid and butane -1,4-diol.

3. Polymer mixture of claim 1, wherein the vinylaromatic -(meth)acrylonitrile-rubber based graft copolymer is a graft copolymer built up from a rubber backbone upon which have been grafted A) styrene, alpha -methylstyrene, a styrene substituted with one or more halogen atoms or with organic groups in its aromatic nucleus, methylmethacrylate or a blend thereof and B) acrylonitrile, methacrylonitrile, methylmethacrylate, maleic anhydride, N-substituted maleinimide or a blend thereof.

4. Polymer mixture of Claim 1 comprising as linear aliphatic polyester a polycaprolactone.

5. Polymer mixture of Claim 1 comprising as organic phosphate a phosphate with the following formula: 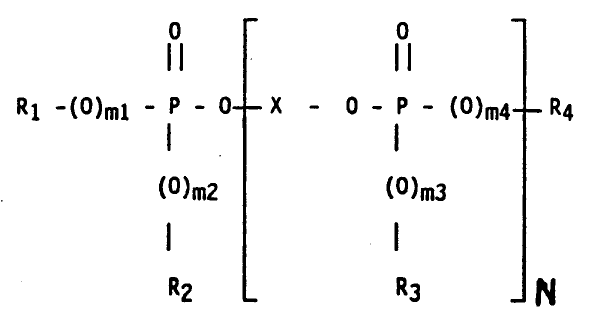 wherein R₁, R₂, R₃ and R₄ each represent an arylgroup which may be substituted with halogen atoms or alkylgroups chosen independently of each other and wherein X is an arylene group, M₁, M₂, M₃ and M₄ each independently of each other are zero or one and wherein N has a value of 0, 1, 2, 3 or 4.
